## Europäisches Patentamt
## European Patent Office
## Office européen des brevets

(11) Veröffentlichungsnummer: **0 231 913**

**B1**

(12) # EUROPÄISCHE PATENTSCHRIFT

(45) Veröffentlichungstag der Patentschrift:
**27.12.89**

(51) Int. Cl.⁴: **H 05 B 3/26, F 24 D 13/02**

(21) Anmeldenummer: **87101353.8**

(22) Anmeldetag: **02.02.87**

(54) **Belag für Wand-, Decken- oder Fussbodenbekleidungen.**

(30) Priorität: **03.02.86 DE 3603233**

(43) Veröffentlichungstag der Anmeldung:
**12.08.87 Patentblatt 87/33**

(45) Bekanntmachung des Hinweises auf die Patenterteilung:
**27.12.89 Patentblatt 89/52**

(84) Benannte Vertragsstaaten:
**AT BE CH DE ES FR GB IT LI LU NL SE**

(56) Entgegenhaltungen:
**EP-A-0 157 179**
**EP-A-0 158 091**
**DE-A-2 427 007**
**DE-A-2 449 676**
**DE-A-2 515 187**
**DE-U-8 413 423**
**US-A-2 979 595**

(73) Patentinhaber: **Buchtal Gesellschaft mit beschränkter Haftung, Buchtalweg, D-8472 Schwarzenfeld(Opf.) (DE)**

(72) Erfinder: **Cremer, Gottfried, Dr., Steyrer Weg 6, D-5000 Köln 40 (DE)**
Erfinder: **Bard, Martin, Seminargasse 26, D-8450 Amberg (DE)**

(74) Vertreter: **Betzler, Eduard, Dipl.- Phys., Postfach 70 02 09 Plinganserstrasse 18a, D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen keramische Platten aufweisenden Belag für Wand-, Decken oder Fußbodenbekleidungen, bei dem die keramischen Platten mit einer elektrisch leitenden Beschichtung versehen oder selbst elektrisch leitend ausgebildet und an Zu- und Ableitungen angeschlossen sind.

In der EP-A-0 157 179 wird ein flächiger keramischer Formkörper beschrieben, der auf der seiner Sichtseite abgewendeten Seite mit einer elektrischen Widerstandsbeschichtung versehen ist. Um es möglich zu machen, die auf einer damit zu verkleidenden Wand-, Decken- oder Bodenfläche zur Verfügung stehende Strahlungsfläche optimal zu gestalten, mit möglichst wenigen elektrischen Anschluß- und Verbindungselementen auszukommen und eine gleichmäßige Wärmeabstrahlung zu gewährleisten, ist unter Verwendung einer aus plastischem keramischen Ausgangsmaterial gepreßten, gewalzten und gebrannten Platte die elektrische Widerstandsbeschichtung als Widerstandsschicht aus einem Material ausgebildet, bei dem nicht metallische, große spezifische Oberfläche aufweisende, elektrisch leitende, bei Temperaturerhöhung ihre elektrische Leitfähigkeit nicht wesentlich ändernde Partikel in einer elektrisch nicht oder nur schlecht leitenden Trägersubstanz eingebettet sind, wobei dieses Material so aufgetragen ist, daß die Widerstandsbeschichtung eine gleichmäßige elektrische und thermische Leitfähigkeit aufweist. Erkennbar wird dieser Formkörper unmittelbar auf der zu verkleidenden Wand-, Decken- oder Bodenfläche aufgebracht, wobei sich insbesondere bei der Bekleidung von Bodenflächen erhebliche Schwierigkeiten ergeben können. Zum einen ist eine einmal gewählte vollund teilflächige Beheizung der entsprechenden Raumumgrenzung nach Fertigstellung des Belages nicht mehr veränderbar. Werden zum anderen bei Bodenbelägen beheizte Flächen durch Teppiche, Möbel oder ähnliche Gegenstände abgedeckt, so heizen sich diese Flächenbereiche besonders stark auf, da eine Wärmeabführung durch die aufgestellten Gegenstände weitgehend verhindert wird. Die an der Begrenzungsfläche eines Raumes vorliegende Temperatur ist jedoch nur in Abhängig keit von einem einzigen gewählten Punkt der entsprechenden Begrenzungsfläche regelbar. Gesonderte Schaltkreise sind entweder zu aufwendig oder nicht mehr veränderbar. In einem großen durchgehenden Raumbegrenzungsbelag müssen darüber hinaus, weil nur vom Rand des Begrenzungsbelages her versorgbar, entweder bei kleiner Betriebsspannung große Leitungsquerschnitte oder bei kleiner gewählten Querschnitten um so höhere Spannungen eingesetzt werden, die gegebenenfalls zu Gefährdungen der den Raum benutzenden Personen führen können. Im Falle von Beschädigungen eines solchen Raumbegrenzungsbelages ist es im allgemeinen unmöglich, wenigstens aber außerordentlich schwierig, die Schäden zu beseitigen.

Hier setzt die Erfindung ein und schlägt vor, daß die mit einer elektrisch leitenden Beschichtung versehen oder selbst elektrisch leitend ausgebildeten keramischen Platten jeweils die Sichtseite bildender Bestandteil eines Verbundelementes sind, das auf in vorgegebenen Abständen auf einer tragfähigen Unterkronstruktion angeordneten Stützen direkt oder indirekt aufgelagert ist, daß jedes Verbundelement als auswechselbare, in sich geschlossene elektrische Einheit ausgebildet ist und die Einheiten einzeln durch gesonderte Schaltkreise an die Stromversorgung unschließbar sind, und daß die Leistungszufuhr zu den keramischen Platten oder Gruppen davon individuell steuer- bzw. regelbar ist.

Damit kann jedes einzelne Verbundelement in beliebiger Weise an die Zu- und Ableitungen angeschlossen werden, wodurch örtlich unterschiedliche Beheizungen möglich sind, bei Schäden an dem einen oder anderen Verbundelement diese ohne Schwierigkeiten ausgetauscht werden können, eine beliebige Fassung einzelner Verbundelemente zu Gruppen vorgenommen werden kann und damit bestimmte Flächen des Raumbegrenzungsbelages individuell mit Strom versorgt werden können. Es ist ferner jederzeit eine nachträgliche Umrüstung bzw. Umgruppierung der einzelnen Verbundelemente möglich, weil sie durch gesonderte Schaltkreise versorgt werden können. Da die einzelnen Verbundelemente individuell versorgt werden, ergibt sich auch die Möglichkeit gegebenenfalls erheblicher Energieeinsparungen. Dadurch daß die Verbundelemente auf Stützen auf einer tragfähigen Unterkonstruktion direkt oder indirekt aufgelagert sind, bleibt für die Zuführungsleitungen, gegebenenfalls zusammengefaßt zu Kabelbäumen, der entsprechende Raum, der ausreicht, um auch noch Schaltelemente und gegebenenfalls andere elektrische Steuerungseinheiten unterzubringen, die dann von außen her gesteuert bzw. geregelt werden können.

Vorteilhaft ist in Weiterbildung der Erfindung der Tragkörper aus schlecht wärmeleitenden Material gebildet, um ein Abströmen der zugeführten Wärmeleistung nach unten in die Unterkonstruktion zu verhindern.

Um die Stabilität des gesamten Verbundkörpers noch weiter zu erhöhen, ist wenigstens der Tragkörper von einem wenigstens die Seitenbegrenzungen des Verbundelementes umhüllenden Rahmen umkleidet. Dieser Rahmen kann als den Tragkörper und gegebenenfalls auch die aufgelagerte keramische Platten aufnehmende Wanne ausgebildet sein.

Durch die Erfindung ist es möglich, die keramische Platte auf beiden Seiten mit einer elektrisch leitenden Beschichtung zu versehen, wobei die auf der Sichtseite befindliche elektrisch leitende Beschichtung hinsichtlich ihres elektrischen Widerstandes so gewählt ist, daß beispielsweise bei Verwendung des Belages als Bodenbelag in Operationssälen od. dgl. eine ständige Ableitung statischer Elektrizität gewährleistet ist und zugleich verhindert wird, daß ein Abfluß von Strom in gefährlicher Stärke beim Berühren mangelhaft isolierter stromführender Teile durch den menschlichen Körper erfolgt. Es läßt sich also die elektrische Beschichtung so wählen, daß ein elektrischer Widerstand in der Größenordnung von 104 bis 106 Ohm vorhanden ist. Die auf der von der Sichtseite abgewendeten Seite angebrachte elektrisch leitende Beschichtung wird dagegen so gewählt, daß eine Aufheizung der Belagplatte auf gewünschte Temperaturwerte möglich ist.

Da der Belag auf Stützen aufgelagert ist, bietet sich ferner die Möglichkeit an, die elektrischen Energiezu- bzw. -abführungen innerhalb der Stützen zu verlegen, weil von dort aus an den Auflagepunkten sehr günstige Kontaktmöglichkeiten gegeben sind.

Da die Möglichkeit besteht, die elektrische Leistung zu einzelnen Platten oder zu Gruppen von Platten zuzuführen, kann Kleinschutzspannung angewendet werden, weil die für die jeweiligen Platten bzw. Gruppen von Platten erforderliche Leistung nach oben begrenzt ist. Damit ergibt sich auch die Möglichkeit, auf der Sekundärseite der für die Anwendung der Kleinschutzspannung notwendigen Transformatoren einen Mittelabgriff vorzusehen, der über einen vorzugsweise einstellbaren Widerstand geerdet ist. Dies ermöglicht, die Ableitungen der auf der Sichtseite vorgesehenen elektrisch leitenden Beschichtung im Hinblick auf den Erdableitwiderstand $\leq 10^6 \, \Omega$ und den Standortübergangswiderstand $= 50$ k$\Omega$einzuregeln.

Wendet man hingegen eine höhere Betriebsspannung von z. B. 220 V an, so ist diese Möglichkeit nicht gegeben, sondern es müssen die Beschichtungen auf beiden Seiten der Platte elektrisch getrennt werden. Dies geschieht zweckmäßig durch Belassung von zusammenhängenden von leitender Glasur freien Bereichen auf der der Sichtseite abgewendeten Seite der keramischen Platte.

Die Zeichnung zeigt in

Fig. 1    einen Schnitt durch eine bevorzugte Ausführungsform eines Verbundelementes, wie es - schematisch angedeutet - als Bestandteil eines Belages gemäß der Erfindung zum Einsatz kommen kann, einschließlich einer bevorzugten Schaltanordnung zur Energiezuführung mittels Kleinschutzspannung; und in

Fig. 2    eine Unteransicht einer Platte zur elektrischen Trennung der beiden auf der Sichtseite bzw. auf der gegenüberliegenden Seite angeordneten elektrisch leitenden Beschichtung.

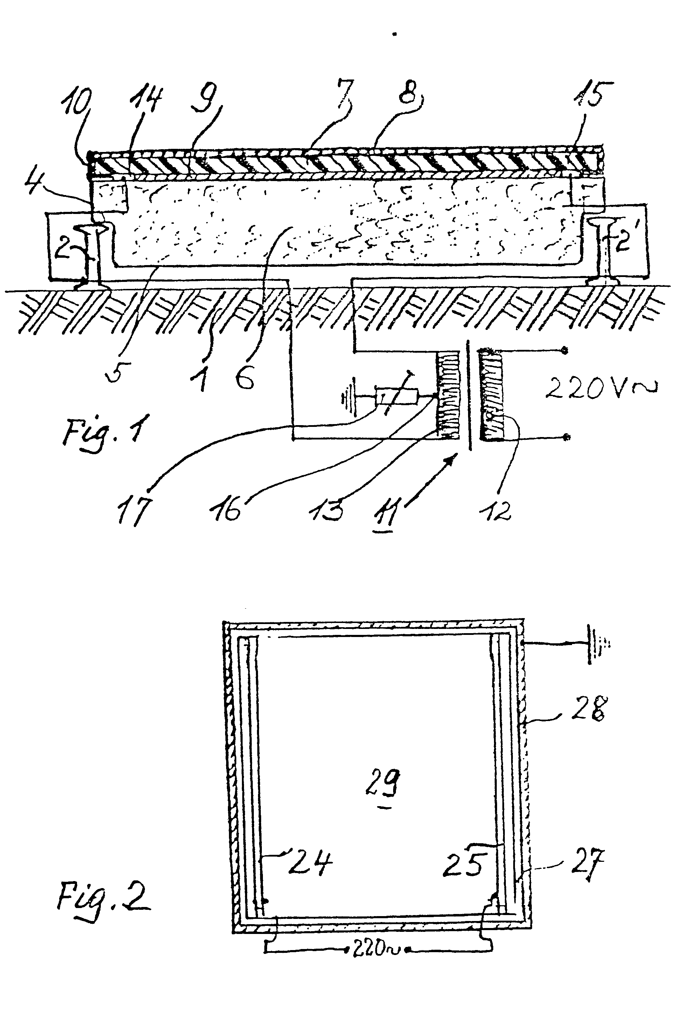

Nach Fig. 1 sind auf einer tragfähigen Unterkonstruktion 1 in geeigneten Abständen Stützen 2, 2 usw. aufgestellt, auf denen mit ihrem Rand 4 eine Wanne 5 ruht, die auch als einfacher Rahmen, d. h. ohne durchgehende Bodenfläche ausgebildet sein kann. In diesem Rahmen bzw. in dieser Wanne 5 ist ein Trägerkörper 6 untergebracht, der aus schlecht wärmeleitendem Material besteht. Auf der oberen Abschlußfläche dieses Tragkörpers 6 ruht, beim wiedergegebenen Ausführungsbeispiel den Rand 4 der Wanne 5 übergreifend eine keramische Platte 7, die selbst elektrisch leitend ausgebildet sein kann, oder wie beim dargestellten Ausführungsbeispiel auf ihrer Sichtseite eine elektrisch leitende Beschichtung 8 trägt. Auf der der Sichtseite der keramischen Platte 7 abgewendeten Seite ist eine weitere elektrisch leitende Beschichtung 9 vorgesehen. Die Beschichtung 8 umgreift beim Ausführungsbeispiel nach Fig. 1 den Rand der keramischen Platte 7 bei 10. Die Beschichtung 8 weist einen elektrischen Widerstand in der Größenordnung von $10^4$ bis $10^6 \, \Omega$ auf. Statt eine Beschichtung mit diesem Widerstand zu wählen, kann auch die keramische Platte 7 entsprechend elektrisch leitend ausgebildet sein.

Die Beschichtung 9 ist aufheizbar und zwar beim in Fig. 1 wiedergegebenen Ausführungsbeispiel durch Energiezufuhr mittels Kleinschutzspannung über einen Transformator 11, dessen Primärseite 12 an z. B. 220 V Wechselspannung angeschaltet ist. Die Sekundärseite 13 ist an die Anschlußleisten 14 und 15 der Beschichtung 9 geschaltet und weist eine Mittelanzapfung 16 auf, die über einen einstellbaren Widerstand 17 geerdet ist, welcher die Einregelung der Ableitung der auf der Sichtseite vorgesehenen elektrisch leitenden Beschichtung 8 im Hinblick auf den Erdableitwiderstand $\leq 10^6 \, \Omega$ und den Standortübergangs-Widerstand $\geq 50$ k$\Omega$ermöglicht.

Fig. 2 zeigt den Anschluß und die Anordnung der Beschichtungen beim Arbeiten mit höherer Betriebsspannung von z. B. 220 V Wechselspannung. Auf der Sichtseite der keramischen Platte 27 befindet sich die elektrisch leitende Beschichtung 28, die durch das Umgreifen der Kanten der Platte 27 sichtbar ist. 29 ist eine auf der Sichtseite abgewendeten Seite der keramischen Platte 27 vorgesehene Beschichtung 29, welche durch Belassen eines entsprechenden Randstreifens von der Beschichtung 28 elektrisch getrennt ist. Auf der Beschichtung 29 befinden sich die Anschlußstreifen 24 und 25, die an 220 V Wechselspannung liegen. Die Beschichtung 28 ist geerdet.

## Patentansprüche

1. Keramische Platten (7) aufweisender Belag für Wand-, Decken oder Fußbodenbekleidungen, bei dem die keramischen Platten (7) mit einer elektrisch leitenden Beschichtung (8, 9) versehen oder selbst elektrisch leitend ausgebildet und an Zu- und Ableitungen angeschlossen sind, *dadurch gekennzeichnet,* daß die keramischen Platten (7) jeweils die Sichtseite bildender Bestandteil eines Verbundelementes sind, das auf in vorgegebenen Abständen auf einer tragfähigen Unterkonstruktion (1) angeordneten Stützen (2) direkt oder indirekt aufgelagert ist und unter der kerami-

schen Platte (7) einen Bestandteil des Verbundelementes bildenden Tragkörper (6) aufweist, daß jedes Verbundelement als auswechselbare, in sich geschlossene elektrische Einheit ausgebildet ist und die Einheiten einzeln durch gesonderte Schaltkreise an die Stromversorgung anschließbar sind, und daß die Leistungszufuhr zu den keramischen Platten (7) oder Gruppen davon individuell steuer- bzw. regelbar ist.

2. Belag nach Anspruch 1, *dadurch gekennzeichnet*, daß der Tragkörper aus schlecht wärmeleitenden Material besteht.

3. Belag nach Anspruch 1 oder 2, *dadurch gekennzeichnet*, daß wenigstens der Tragkörper (6) von einem wenigstens die Seitenbegrenzungen des Verbundelementes umhüllenden Rahmen umkleidet ist.

4. Belag nach Anspruch 3, *dadurch gekennzeichnet*, daß der Rahmen als den Tragkörper (6) und gegebenenfalls auch die aufgelagerte keramische Platte (7) aufnehmende Wanne (5) ausgebildet ist.

5. Belag nach einem oder mehreren der vorhergehenden Ansprüche, *dadurch gekennzeichnet*, daß die keramische Platte (7) auf beiden Seiten mit einer elektrisch leitenden Beschichtung (8, 9) versehen ist.

6. Belag nach Anspruch 5, *dadurch gekennzeichnet*, daß der Widerstand der auf der Sichtseite befindlichen elektrisch leitenden Beschichtung (8) hochohmiger als der Widerstand auf der der Sichtseite abgewendeten Seite ist.

7. Belag nach einem der Ansprüche 1 bis 4, bei dem die keramischen Platten (7) selbst elektrisch leitend ausgebildet sind, *dadurch gekennzeichnet*, daß der Widerstand der elektrisch leitend ausgebildeten Platten (7) hochohmiger als der Widerstand einer auf der der Sichtseite abgewendeten Seite aufgebrachten elektrisch leitenden Beschichtung (9) ist.

8. Belag nach einem oder mehreren der vorhergehenden Ansprüche, *dadurch gekennzeichnet*, daß die Verbundelemente vorgefertigte Baukörper sind.

9. Belag nach einem oder mehreren der vorhergehenden Ansprüche, *dadurch gekennzeichnet*, daß die elektrische Energiezu- bzw. -abführung innerhalb der Stützen (2) erfolgt.

10. Belag nach einem oder mehreren der vorhergehenden Ansprüche, *dadurch gekennzeichnet*, daß die Energiezuführung zu der auf der der Sichtseite abgewendeten Seite befindlichen elektrisch leitenden Beschichtung (9) mittels Kleinschutzspannung erfolgt.

11. Belag nach Anspruch 10, *dadurch gekenn-*

*zeichnet*, daß die die Kleinschutzspannung liefernde Sekundärseite (13) des mit seiner Primärseite (12) am Netz liegenden Transformators (11) eine Mittelanzapfung (16) aufweist, die über einen Widerstand (17) an Masse gelegt ist.

12. Belag nach Anspruch 11, *dadurch gekennzeichnet*, daß der in der Mittelanzapfung (16) liegende Widerstand (17) ein einstellbarer Widerstand ist.

**Claims**

1. A covering comprising ceramic tiles (7) for wall, ceiling or floor linings, wherein the ceramic tiles (7) are provided with an electrically conductive coating (8, 9) or are themselves designed to be electrically conductive, and are connected to incoming and outgoing lines, *characterized in that* the ceramic tiles (7) are each the part forming the visible side of a compound element that is bedded directly or indirectly on supports (2) disposed at predetermined intervals on a stable substructure (1), and that has under the ceramic tile (7) a supporting body (6) forming part of the compound element, in that each compound element is designed as a replaceable, self-contained electrical unit and the units are adapted to be connected individually to the power supply by separate circuits, and in that the power supply to the ceramic tiles (7) or groups thereof is individually controllable or adjustable.

2. The covering of claim 1, *characterized in that* the supporting body is made of material with poor thermal conduction.

3. The covering of claim 1 or 2, *characterized in that* at least the supporting body (6) is surrounded by a frame that envelops at least the side limits of the compound element.

4. The covering of claim 3, *characterized in that* the frame is embodied by a trough (5) that takes up the supporting body (6) and optionally also the ceramic tile (7) bedded thereon.

5. The covering of one or more of the above claims, *characterized in that* the ceramic tile (7) is provided on both sides with an electrically conductive coating (8, 9).

6. The covering of claim 5, *characterized in that* the resistance of the electrically conductive coating (8) located on the visible side is higher than the resistance on the side facing away from the visible side.

7. The covering of any of claims 1 to 4, wherein the ceramic tiles (7) are themselves designed to be electrically conductive, *characterized in that* the resistance of the tiles (7) designed to be electrically conductive is higher than the resistance of an electrically conductive coating (9) provided on the side facing away from the visible side.

8. The covering of one or more of the above claims, *characterized in that* the compound elements are prefabricated bodies.

9. The covering of one or more of the above claims, *characterized in that* the supply and removal of electrical energy is effected within the supports (2).

10. The covering of one or more of the above claims, *characterized in that* the energy supply to the electrically conductive coating (9) located on the side facing away from the visible side is effected by means of protective low voltage.

11. The covering of claim 10, *characterized in that* the secondary side (13), that supplies the protective low voltage, of the transformer (11) connected to the supply mains on its primary side (12) has a center tap (16) which is grounded via a resistor (17).

12. The covering of claim 11, *characterized in that* the resistor (17) located in the center tap (16) is an adjustable resistor.

**Revendications**

1. Revêtement constitué de plaques céramiques (7) pour recouvrement de murs, de plafonds ou de sols, pour lequel les plaques céramiques (7) sont munies d'un revêtement (8, 9) conducteur de l'électricité ou sont elles-même réalisées de façon à conduire l'électricité et raccordées avec des conducteurs électriques d'arrivée ou de retour, *caractérisé en ce que* les plaques céramiques (7) sont chacune des parties constitutives d'un élément composite formant la face visible, qui est posé, directement ou indirectement, sur des supports (2) disposés, à des distances appropriées, sur une infrastructure portante (1) et présente, au dessous de la plaque céramique (7) un élément support (6) formant une partie constitutive de l'élément composite, en ce que chaque élément composite est réalisé, de telle façon qu'il puisse être échangé, en une unité électrique indépendante et que les unités peuvent être raccordées séparément à l'alimentation en courant par des circuits de connexion, et en ce que l'arrivée de puissance aux plaques céramiques (7) ou aux groupes de celles-ci peut être commandée ou régulée individuellement.

2. Revêtement suivant la revendication 1, *caractérisé en ce que* l'élément support est constitué d'une matière mauvaise conductrice de la chaleur.

3. Revêtement suivant la revendication 1 ou la revendication 2, *caractérisé en ce* qu'au moins l'élément support (6) est revêtu par un cadre formant gaine au moins autour des limites latérales de l'élément composite.

4. Revêtement suivant la revendication 3, *caractérisé en ce que* le cadre est réalisé de façon à former l'élément support (6) et aussi, le cas échéant, le berceau (5) recevant la plaque céramique (7) posée par dessus.

5. Revêtement suivant une ou plusieurs des revendications précédentes, *caractérisé en ce que* la plaque céramique (7) est munie sur ses deux faces d'un revêtement (8, 9) conducteur de l'électricité.

6. Revêtement suivant la revendication 5, *caractérisé en ce que* la résistance du revêtement (8) conducteur de l'électricité se trouvant sur la face visible a une plus forte valeur ohmique que la résistance sur la face opposée à la face visible.

7. Revêtement suivant l'une quelconque des revendications 1 à 4, pour lequel les plaques céramiques (7) sont réalisées de façon à conduire elles-même l'électricité, *caractérisé en ce que* la résistance des plaques céramiques réalisées de façon à conduire l'électricité a une plus forte valeur ohmique que la résistance d'un revêtement (9) conducteur de l'électricité rapporté sur la face opposée à la face visible.

8. Revêtement suivant une ou plusieurs des revendications précédentes, *caractérisé en ce que* les éléments composites sont des éléments de construction préfabriqués.

9. Revêtement suivant une ou plusieurs des revendications précédentes, *caractérisé en ce que* l'arrivée et le départ de l'énergie électrique se fait à l'intérieur des supports (2).

10. Revêtement suivant une ou plusieurs des revendications précédentes, *caractérisé en ce que* l'arrivée de l'énergie électrique au revêtement (9) conducteur de l'électricité, rapporté sur la face opposée à la face visible, se fait à l'aide de basse tension de protection.

11. Revêtement suivant la revendication 10, *caractérisé en ce que* le secondaire (13), fournissant la basse tension de protection, du transformateur (11), raccordé au réseau par son primaire (12), présente une prise intermédiaire (16) qui est mise à la masse par l'intermédiaire d'une résistance réglable (17).

12. Revêtement suivant la revendication 11, *caractérisé en ce que* la résistance placée dans la prise intermédiaire (16) est une résistance réglable.

*Fig. 1*

10   14   9     7    8      15

4

2                   2'

5    1   6

220V∼

17    16    13   11    12

*Fig. 2*

28

29

24    25    27

220∼